# EUROPÄISCHE PATENTSCHRIFT

(11) **EP 2 682 780 B1**
(45) Veröffentlichungstag und Bekanntmachung des Hinweises auf die Patenterteilung: **23.04.2014**
(21) Anmeldenummer: 12174918.8
(22) Anmeldetag: 04.07.2012
(51) Int. Cl.: G01S 7/481, G01S 7/486, G01S 17/02, G01S 17/42, G01S 17/88

(54) **Verfahren zur sicheren Erfassung und Positionsbestimmung von Objekten und Sicherheitsvorrichtung**
Method for securely detecting and positioning objects and safety device
Procédé de détection et de détermination de position sécurisée d'objets et dispositif de sécurité

(43) Veröffentlichungstag der Anmeldung: 08.01.2014
(73) Patentinhaber: SICK AG, 79183 Waldkirch (DE)
(72) Erfinder: Wüstefeld, Martin, 79350 Sexau (DE); Rapp, Ralph, 79346 Bahlingen (DE)
(74) Vertreter: Ludewigt, Christoph

(56) Entgegenhaltungen:
- EP-A1- 0 569 686
- EP-A1- 2 381 268
- US-A- 5 949 530

## Beschreibung

Die Erfindung betrifft ein Verfahren zur sicheren Erfassung und Positionsbestimmung von Objekten in einem Überwachungsbereich nach dem Oberbegriff von Anspruch 1 und eine Sicherheitsvorrichtung zur Durchführung des Verfahrens.

Zur Überwachung von Arbeitsbereichen werden häufig Sicherheitslaserscanner eingesetzt, wie sie beispielsweise aus DE 43 40 756 A1 bekannt sind. Ein von einem Laser erzeugter Lichtstrahl wird über eine Lichtablenkeinheit in einen Schutzbereich gelenkt und dort von einem gegebenenfalls vorhandenen Objekt remittiert. Zumindest ein Teil des remittierten Lichts gelangt wieder zurück zu der Laserscaneinheit und wird dort von einem Empfänger detektiert. Die Lichtablenkeinheit ist in der Regel schwenkbar bzw. drehbar ausgestaltet, so dass der von dem Laser erzeugte Lichtstrahl ein durch die Schwenk- bzw. Drehbewegung erzeugtes Schutzfeld periodisch überstreicht. Wird ein vom Objekt remittiertes Lichtsignal aus dem Schutzbereich empfangen, so kann aus der Winkelstellung der Ablenkeinheit auf die Winkellage des Objektes im Schutzbereich geschlossen werden. Wird zusätzlich zum Beispiel die Laufzeit von einzelnen Laserlichtpulsen vom Aussenden bis zum Empfang einer Reflexion an dem Objekt überwacht, kann aus der Laufzeit unter Verwendung der Lichtgeschwindigkeit zusätzlich auf die Entfernung des Objektes vom Laserscanner geschlossen werden. Mit den Winkel- und Entfernungsangaben lässt sich der Ort des Objektes ermitteln und die vom Lichtstrahl überstrichene Scanebene vollständig überwachen. Befindet sich in der Scanebene ein unzulässiges Objekt, so kann von der Auswerteeinheit des Scanners ein entsprechendes Warn- oder Stopsignal ausgegeben werden.

Derartige Systeme werden zum Beispiel an Maschinen eingesetzt, bei denen ein Gefahrenbereich überwacht werden muss, der beim Betrieb der Maschine von einer Bedienperson nicht betreten werden darf. Wird mit Hilfe des Laserscanners die Anwesenheit eines unzulässigen Objektes - also zum Beispiel ein Bein einer Bedienperson - im Gefahrenbereich festgestellt, wird ein Nothalt der Maschine bewirkt. Derartige Scansysteme als Sicherheitssensoren müssen zuverlässig arbeiten und deshalb hohe Sicherheitsanforderungen, beispielsweise die Norm EN13849 für Maschinensicherheit und insbesondere die Gerätenorm EN61496 für berührungslos wirkende Schutzeinrichtungen (BWS), erfüllen.

Zur Erfüllung dieser Sicherheitsnormen sind eine Reihe von Maßnahmen zu treffen, wie z. B. sichere elektronische Auswertung durch redundante, diversitäre Elektronik, Funktionsüberwachung durch beispielsweise Überwachung der Verschmutzung optischer Bauteile, insbesondere einer Frontscheibe und/oder Vorsehen von einzelnen Testzielen mit definierten Reflexionsgraden, die unter den entsprechenden Scanwinkeln erkannt werden müssen.

Solche Sicherheitslaserscanner werden auch an sogenannten FTS ("fahrerlose Transportsysteme") eingesetzt, um zu verhindern, dass diese Transportsysteme mit Objekten, die ihren Fahrweg kreuzen, wie z. B. Personen, zusammenstoßen. Da die Zusammenstoßgefahr geschwindigkeitsabhängig ist, weist der Laserscanner anpassbare Schutzfelddimensionen auf, die in Abhängigkeit der Fahrzeuggeschwindigkeit umschaltbar oder in sonstiger Weise veränderbar sind.

Im Indoor Bereich, in dem keine Sichtstörungen von außen auftreten, sind die genannten Maßnahmen zur Erfüllung der Sicherheitsnormen ausreichend. Im Outdoor Bereich ist der Einsatz von Sicherheitsscannern bisher sehr problematisch. Durch Regen, Nebel, Schnee, Luftverschmutzung und dergleichen, die im Folgenden "Softtargets" genannt werden, wird die nutzbare optische Leistung in unbekanntem Maße reduziert und damit die Detektionszuverlässigkeit reduziert. Das führt zu nicht vorhersagbarem fehlerhaften Ansprechen des Scanners, beispielsweise aufgrund von an den Softtargets reflektierter Sendestrahlung, die vom Scanner als "Objekt im Schutzbereich" interpretiert wird, sobald das rückgestreute Signal oberhalb einer Bewertungsschwelle liegt. Ein weiterer Nachteil ist, dass beim Auftreten von Softtargets die Sendestrahlung gedämpft wird und damit die Sichtweite in unbekanntem Maße reduziert wird, so dass möglicherweise Objekte im Schutzbereich nicht erkannt werden.

Aus der EP 2 381 268 A1 ist ein Sicherheitslaserscanner bekannt, der einen Laserstrahl mit einem Lichtsender aussendet, einen einem Überwachungsbereich einschließenden Sichtbereich des Scanners mit dem Laserstrahl über eine Ablenkeinheit periodisch abscannt, den an Objekten im Sichtbereich reflektierten Laserstrahl mit einem Lichtempfänger empfängt und Empfangssignalen bereitstellt, deren Signalhöhen den empfangenen Lichtintensitäten entsprechen. Wenn ein unzulässiges Objekt im Überwachungsbereich detektiert wird, gibt der Scanner ein Sicherheitssignal (Warn- oder Abschaltsignal) aus.

Aus der EPO 569 686 A1 ist eine Überwachungseinrichtung bekannt, die im Wesentlichen aus einem Lichtsender, einem Lichtempfänger und einer Schaltungsanordnung zur Signalauswertung besteht. Hierbei wird ein Lichtstrahl von dem Lichtsender auf eine Referenzfläche gestrahlt, die eine reflektierte Strahlungsleistung an dem Lichtempfänger zurückgibt. Diese Leistung wird mittels eines Impulsformers und eines Phasendetektors in einen Spannungsimpuls umgewandelt und abgespeichert.

Aus einer Phasenverschiebung dieses Spannungsimpulses wird ein Abstand bzw. eine Überwachungsstrecke zwischen der Referenzfläche und einer Bezugsfläche des Sensors berechnet und abgespeichert. Wird durch ein Eindringen eines Hindernisses (26) in die Überwachungsstrecke die Phase der reflektierten Strahlungsleistung und somit die Phasenverschiebung verändert, wird ein Warnsignal ausgegeben.

Aus der DE 39 08.273 C1 ist ein Scanner bekannt, bei dem durch Überwachung der Positionen mehrerer abgesetzter, externer Testziele mit definierten Reflexionsgraden die Detektionsfähigkeit sichergestellt werden kann.

Nachteilig daran ist, dass die Änderung des Reflexionsgrades des externen Testzieles und damit einhergehende Änderung der Detektionsfähigkeit im Falle des Auftretens von Softtargets nicht aufgedeckt werden. Im Wesentlichen wird nur geprüft, ob in den Bereichen, in denen sich ein Absorber als Testziel befindet, kein Licht empfangen wird und in den Bereichen, in denen Reflektoren vorgesehen sind, Licht empfangen wird. Änderungen des Reflexionsgrades der Testziele und damit einhergehende Änderungen der Detektionsfähigkeit im Falle des Auftretens interner Fehler des Scanners, wie zum Beispiel Abfallen der Sendeleistung oder Anstieg der Bewertungsschaltschwellen, werden nicht aufgedeckt. Weiter nachteilig ist der notwendige Einsatz von speziell für den Scanner ausgelegte Testziele. Auch müssen sich die Testziele in einem vorgegebenen Abstand vom Scanner befinden.

Aus der EP 0 520 247 A2, US 6 188 319 B1, EP 0 967 492 A1 und der GB 2 424 272 A sind weitere Scanner nach dem Oberbegriff des Anspruchs 1 bekannt.

Ausgehend von diesem Stand der Technik ist es Aufgabe der Erfindung, die genannten Nachteile zu vermeiden und ein verbessertes Verfahren und eine Sicherheitsvorrichtung bereitzustellen, mit der eine zuverlässige Detektionsfähigkeit, insbesondere im Outdoor Einsatz möglich ist.

Diese Aufgabe wird durch ein Verfahren mit den Merkmalen des Anspruchs 1 und eine Sicherheitsvorrichtung mit den Merkmalen des Anspruchs 7 gelöst.

Das erfindungsgemäße Verfahren zur sicheren Erfassung und Positionsbestimmung von Objekten in einem Überwachungsbereich mittels eines optoelektronischen Scanners umfasst die Schritte:
- Aussenden eines Sendelichtstrahls mit einem Lichtsender und
- periodisches Abscannen eines den Überwachungsbereich einschließenden Sichtbereichs des Scanners mit dem Sendelichtstrahl über eine Ablenkeinheit;
- Empfangen des an Objekten im Sichtbereich reflektierten Sendelichtstrahls mit einem Lichtempfänger und Bereitstellen von Empfangssignalen, deren Signalhöhen den empfangenen Lichtintensitäten entsprechen,
- Ausgeben eines Sicherheitssignals (Warn- oder Abschaltsignal), wenn ein unzulässiges Objekt im Überwachungsbereich detektiert wird,
- Bereitstellen eines externen Referenzziels im Sichtbereich,
- Erfassen der Ist-Signalhöhe der Reflexionen von dem Referenzziel,
- Errechnen einer Referenzziel-Soll-Signalhöhe, die einem Mindest-Soll-Reflexionsgrad des Referenzziels entspricht, aus dem gemessenen Abstand zum Referenzziel, einer scannerspezifischen, abstandsabhängigen Empfangscharakteristik des Lichtempfängers und dem aktuell gemessenen Empfangssignal auf dem Referenzziel bei Inbetriebnahme,
- Ausgeben eines Fehlersignals, wenn während eines Arbeitsbetriebs eine Unterschreitung der Referenzziel-Soll-Signalhöhe erkannt wird.

Der besondere Vorteil des erfindungsgemäßen Verfahrens besteht in einer definierten Detektionsfähigkeit des Scanners auch bei Vorliegen von Softtargets, wie sie im Outdoor Bereich auftreten. Dabei kann sich das Referenzziel in einem beliebigen Abstand zum Scanner befinden, denn der Scanner bestimmt bei Inbetriebnahme selbst die Referenzziel-Soll-Signalhöhe, die einem Mindest-Soll-Reflexionsgrad entspricht, die also der Signalhöhe entspricht, die vorliegen muss, um bei den aktuellen Sichtverhältnissen gerade noch eine sichere Objekterkennung sicher zustellen. Insgesamt ist dadurch die Verfügbarkeit, insbesondere im Outdoor Einsatz erhöht und insbesondere definiert. Durch die scannerinterne Referenzbestimmung können auch natürliche Flächen als Referenzziel verwendet werden, wodurch Inbetriebnahmeaufwendungen des Kunden entfallen können, wie zum Beispiel eine Montage von separaten Referenzzielen und/oder geometrische Forderungen und Positionsanforderungen an das Referenzziel.

Durch die Berücksichtigung der Entfernung des Referenzziels bei der Errechnung der Referenzziel-Soll-Signalhöhe kann das Referenzziel in beliebiger Entfernung zum Scanner angeordnet sein. Die Referenzziel-Soll-Signalhöhe, also der Mindest-Soll-Reflexionsgrad des Referenzziels, wird errechnet aus dem gemessenen Abstand zum Referenzziel, einer scannerspezifischen, abstandsabhängigen Empfangscharakteristik des Lichtempfängers und dem aktuell gemessenen Empfangssignal auf dem Referenzziel.

Es ist besonders sinnvoll, dass der Mindest-Soll-Reflexionsgrad des Referenzziels 2% beträgt, denn dann ist sichergestellt, dass wenn das Referenzziel erkannt wird, auch immer sichergestellt ist, dass Objekte normenkonform erfasst werden.

In Weiterbildung der Erfindung wird die Position des Referenzziels überwacht, so dass auch nach Inbetriebnahme keine Manipulationen vorgenommen werden können. Dazu umfasst der Sendelichtstrahl Lichtimpulse und neben der Signalhöhe der Empfangssignale werden auch die Lichtlaufzeit und die entsprechenden Winkel, in den die Lichtimpulse ausgesandt wurden, erfasst.

In einer Ausführung der Erfindung wird das Referenzziel selbst durch ein zu überwachendes Objekt gebildet. Eine solche Ausführungsform ist natürlich nur dann sinnvoll, wenn das Objekt sich ständig im Überwachungsbereich aufhält. Dann hat diese Ausführungsform aber den Vorteil, dass mit der erfindungsgemäßen Beobachtung des Reflexionsgrads des Referenzziels quasi eine Sichtweitenbestimmung erfolgt und somit Sicherheitsparameter, wie beispielsweise die Ausdehnung des Überwachungsbereichs, an die aktuelle Sichtweite angepasst werden können.

Eine erfindungsgemäße Sicherheitsvorrichtung für ein erfindungsgemäßes Verfahren weist einen Scanner mit einem Lichtsender zum Aussenden eines Sendelichtstrahls, einer Ablenkeinheit zum periodisches Abscannen eines den Überwachungsbereich einschließenden Sichtbereichs des Scanners mit dem Sendelichtstrahl, einem Lichtempfänger zum Empfangen des an Objekten im Sichtbereich reflektierten Sendelichtstrahls und zum Bereitstellen von Empfangssignalen, deren Signalhöhen den empfangenen Lichtintensitäten entsprechen, einer Auswerteeinheit zum Verarbeiten der Empfangssignale und Ausgeben eines Sicherheitssignals (Warn- oder Abschaltsignal), wenn ein unzulässiges Objekt im Überwachungsbereich detektiert wird und ein externes Referenzziel im Sichtbereich auf.

Weiter weist die Auswerteeinheit eine Signalhöhenermittlungseinheit zur Ermittlung der Ist-Signalhöhe der Reflexionen von dem Referenzziel, eine Reflexionsgradermittlungseinheit zur Errechnung eines Reflexionsgrades des Referenzziels aus dem gemessenen Abstand zum Referenzziel, einer scannerspezifischen, abstandsabhängigen Empfangscharakteristik des Lichtempfängers und der Ist-Signalhöhe der Reflexionen von dem Referenzziel, eine Bestimmungseinheit zum Bestimmen einer Referenzziel-Soll-Signalhöhe, die einem Mindest-Soll-Refelexionsgrad des Referenzziels entspricht und eine Ausgabeeinheit zum Ausgeben eines Fehlersignals, wenn während des Arbeitsbetriebs eine Unterschreitung der Referenzziel-Soll-Signalhöhe erkannt wird, auf.

In Weiterbildung der Erfindung besteht das Referenzziel aus wenigstens einem den Überwachungsbereich mechanisch abgrenzenden Element. Derartige Elemente sind meistens immer vorhanden, beispielsweise in Form von Gehäusewänden oder Boden.

Es wäre auch denkbar, dass das Referenzziel einen Retroreflektor aufweist.

Das Referenzziel sollte mindestens so groß sein wie das geometrische Auflösungsvermögen des Scanners, damit das Referenzziel auch immer sicher erkannt werden kann.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
Fig. 1 eine schematische Darstellung eines Laserscanners gemäß der Erfindung;
Fig. 2 eine erfindungsgemäße Sicherheitsvorrichtung;
Fig. 3 ein Ablaufdiagramm des erfindungsgemäßen Verfahrens;
Fig. 4 ein Ablaufdiagramm einer weiteren Ausführungsform.

Die im Folgenden beschriebene Sicherheitsvorrichtung umfasst einen Laserscanner und dient zum Beispiel zur Überwachung auf unbefugten Zugriff eines Überwachungsbereichs. Zum Beispiel kann der Gefahrenbereich eines Krans, einer Holzbearbeitungsmaschine oder dergleichen, überwacht werden, in den während des Betriebes keine Bedienperson eindringen darf. Oder es kann der Bereich vor einem autonom fahrenden Fahrzeug überwacht werden und dergleichen mehr. Befindet sich ein unzulässiges Objekt, zum Beispiel das Bein einer Bedienperson, in dem Überwachungsbereich, so wird dies von dem beschriebenen Scanner detektiert und ein Sicherheitssignal, das ein Warn- oder ein Abschaltsignal sein kann, ausgegeben und die Gefahr bringende Bewegung gestoppt oder zumindest abgebremst.

Der Begriff des "unzulässigen Objektes" wird im vorliegenden Text für unzulässige bzw. störende Objekte im Schutzfeld verwendet. Insbesondere können damit zum Beispiel auch gefährdete Körperteile von Bedienpersonen gemeint sein.

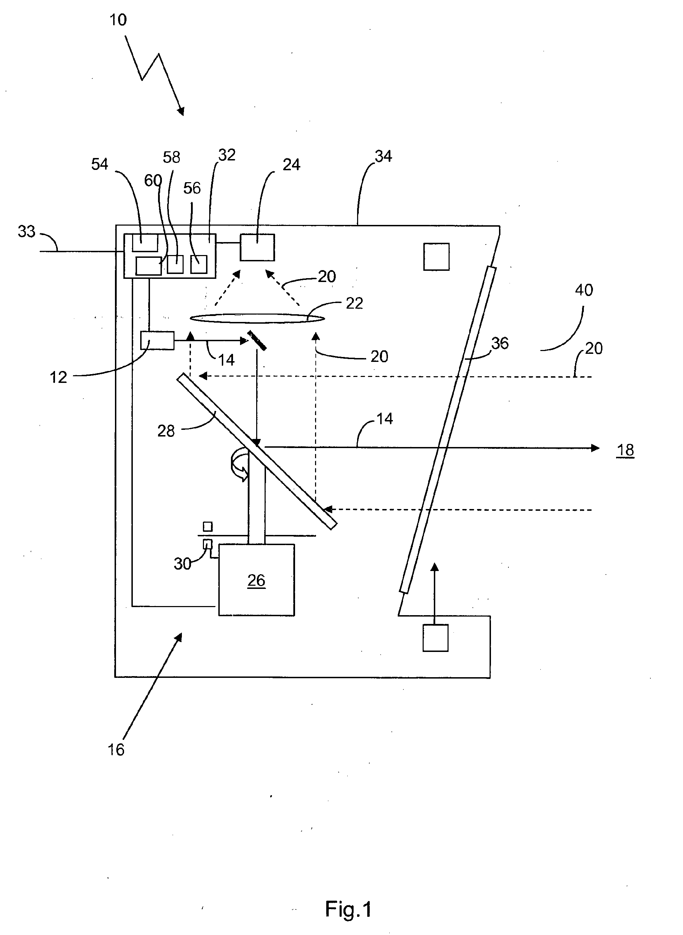

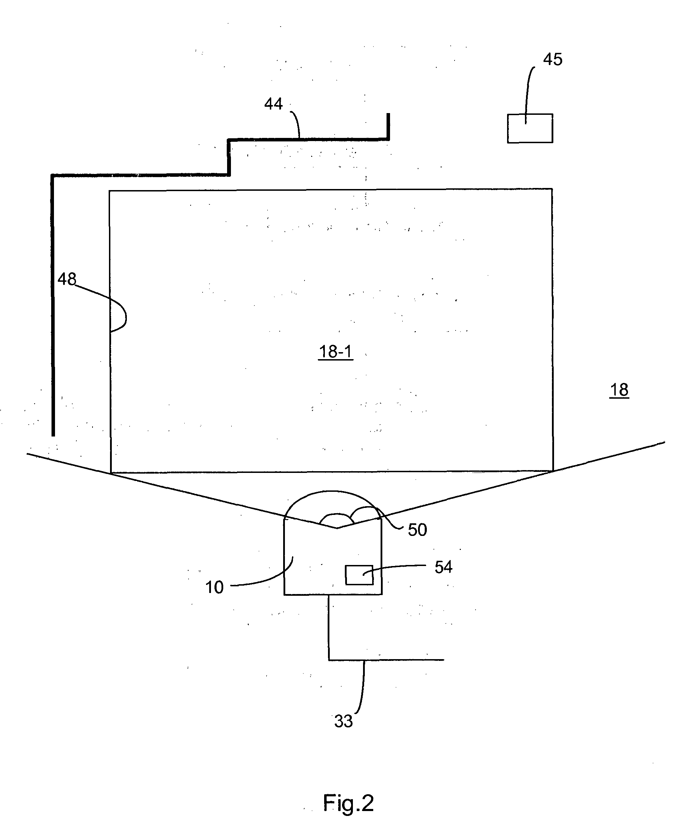

Fig. 1 zeigt schematisch den Aufbau einer Ausführungsform eines Sicherheits-Laserscanners 10 einer erfindungsgemäßen Sicherheitsvorrichtung, die in ihrer Gesamtheit in Fig. 2 schematisch dargestellt ist. Ein von einem Laser 12 erzeugter Lichtstrahl 14, der aus einzelnen Lichtimpulsen besteht, wird über eine Lichtablenkeinheit 16 in einen Sichtbereich 18 gelenkt und dort von einem gegebenenfalls vorhandenen Objekt remittiert. Der Sichtbereich 18 umfasst den gesamten Öffnungswinkel 50 (Fig. 2) des Scanners 10. Remittiertes Licht 20 gelangt wieder zurück zum Laserscanner 10 und wird dort über die Ablenkeinheit 16 und mittels einer Empfangsoptik 22 von einem Empfänger 24 detektiert. Die Lichtablenkeinheit 16 ist in der Regel drehbar ausgestaltet, wobei ein Motor 26 einen Drehspiegel 28 kontinuierlich rotiert. Die jeweilige Winkelstellung des Drehspiegels 28 wird über einen Encoder 30 erfasst. Der von dem Laser 12 erzeugte Lichtstrahl 14 überstreicht somit den durch die Rotationsbewegung erzeugten Sichtbereich 18. Wird ein vom Empfänger 24 empfangenes reflektiertes Lichtsignal 20 aus dem Sichtbereich 18 empfangen, so kann aus der Winkelstellung der Ablenkeinheit 30 auf die Winkellage des Objektes im Sichtbereich 18 geschlossen werden. Zusätzlich wird die Laufzeit der einzelnen Laserlichtpulse des Sendelichts 14 vom Aussenden bis zum Empfang einer Reflexion an dem Objekt überwacht und aus der Lichtlaufzeit unter Verwendung der Lichtgeschwindigkeit auf die Entfernung des Objektes vom Laserscanner 10 geschlossen. Diese Auswertung erfolgt in einer Auswerteeinheit 32, die dafür mit dem Laser 12, dem Empfänger 24, dem Motor 26 und Encoder 30 verbunden ist. Mit den Winkel- und Entfernungsangaben lässt sich der Ort des Objektes ermitteln und auf diese Weise zum Beispiel zweidimensionale Überwachungsbereiche 18-1 vollständig überwachen. Der Überwachungsbereich 18-1 ist in seinen Abmessungen durch entsprechende Parameter definiert, die in der Auswerteeinheit 32 in einem Speicher 54 abgelegt sind. Befindet sich im Überwachungsbereich 18-1 ein unzulässiges Objekt, so kann von der Auswerteeinheit 32 ein entsprechendes Objektfeststellungssignal an einem Ausgang des Laserscanners 10 über eine Leitung 33 ausgegeben werden und somit letztendlich ein Sicherheitssignal ausgegeben werden, um zum Beispiel einen Stop einer Gefahr bringenden Maschine herbeizuführen.

Andere Ausführungsformen eines solchen Scanners sind vorstellbar, beispielsweise Scanner, die nicht auf Basis der Lichtlaufzeit von einzelnen Laserpulsen die Entfernung bestimmen, sondern über Triangulation oder über einen Vergleich der Phase von amplitudenmoduliertem Sendelicht zur Phase des reflektierten Lichts.

Alle genannten Funktionskomponenten sind in einem Gehäuse 34 angeordnet, das frontseitig, also im Bereich des Lichtaus- und Lichteintritts, eine Frontscheibe 36 aufweist. Die Frontscheibe 36 ist zur Vermeidung von direkten Reflexionen in den Empfänger schräg gestellt, so dass der Winkel zwischen Lichtstrahl 14 und Frontscheibe 36 ungleich 90° beträgt.

Fig. 2 zeigt schematisch die erfindungsgemäße Sicherheitsvorrichtung. Diese umfasst neben dem Sicherheits-Laserscanner 10 wenigstens ein Referenzziel 45, das ein einzelnes Ziel sein kann oder auch Teil einer außerhalb des Überwachungsbereichs 18-1 gelegenen Referenzkontur 44, die aus Hauswänden oder dergleichen bestehen kann. Die Referenzkontur 44 verläuft entweder unmittelbar am Überwachungsbereichsrand 48 oder außerhalb des Überwachungsbereichs 18-1.

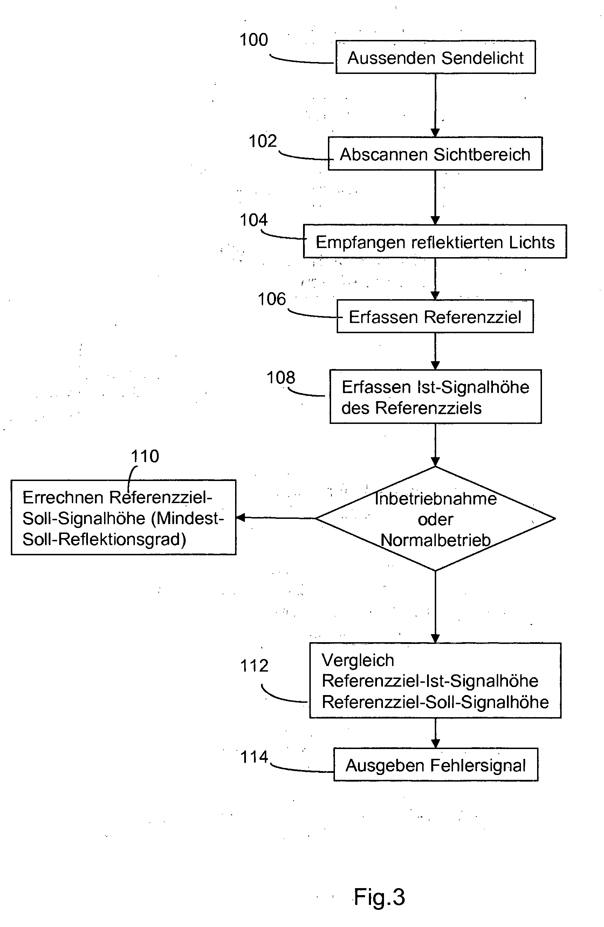

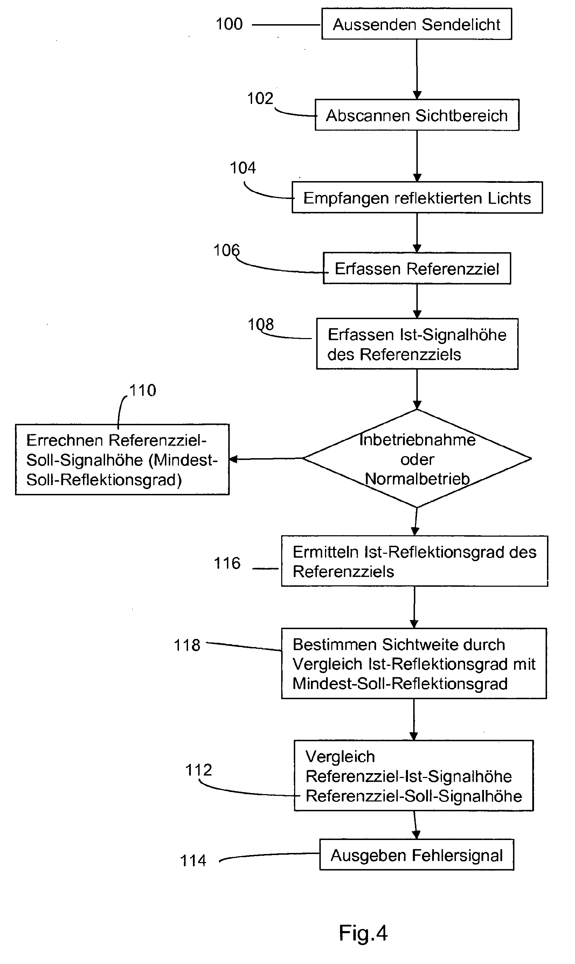

Das erfindungsgemäße Verfahren läuft wie anhand der Fig. 3 und 4 schematisch erläutert, wie folgt ab:

In einem Schritt 100 wird ein Sendelichtstrahl mit dem Lichtsender 12 ausgesendet. Mittels des Ablenkspiegels 28 wird im Schritt 102 der Sendelichtstrahl 14 durch den Sichtbereich 18 periodisch geführt, so dass der Überwachungsbereich 18-1, der Teil des Sichtbereichs 18 ist, abgescannt wird. Befinden sich Objekte im Sichtbereich 18 des Scanners 10 wird der Sendelichtstrahl 14 an diesen Objekten reflektiert und das reflektierte Licht von dem Lichtempfänger 24 empfangen (Schritt 104). Lichtempfänger 24 wandelt das empfangene Licht in elektrische Empfangssignale, deren Signalhöhen den empfangenen Lichtintensitäten entsprechen. Befindet sich ein unzulässiges Objekt im Überwachungsbereich 18-1, so wird von der Auswerteeinheit 32 ein Sicherheitssignal, beispielsweise ein Warn- oder Abschaltsignal, auf der Leitung 33 ausgegeben.

Im Sichtbereich 18 befindet sich nun das externe Referenzziel 45, das im Schritt 106 beim Abscannen des Sichtbereichs 18 vom Sendelichtstrahl 14 erfasst wird. Mit dem Lichtempfänger und einer Signalhöhenermittlungseinheit 56 wird die Ist-Signalhöhe der Reflexionen von dem Referenzziel 45 erfasst (Schritt 108).

Bei Inbetriebnahme des Scanners, also z.B. nach dem Einschalten in einer Initialisierungsphase, wird in einem Schritt 110 unter Berücksichtigung des Abstandes des Referenzziels 45 vom Scanner 10 und der Empfangscharakteristik des Lichtempfängers eine Referenzziel-Soll-Signalhöhe errechnet, die einem Mindest-Soll-Reflexionsgrad des Referenzziels entspricht. Diese Errechnung erfolgt in einer Reflexionsgradermittlungseinheit 58 und einer Bestimmungseinheit 60 der Auswerteeinheit 32. Die Referenzziel-Soll-Signalhöhe ist also diejenige Signalhöhe, die der Scanner auf dem Referenzziel mindestens sehen muss, um eine sichere Objekterkennung zu ermöglichen.

Im weiteren Normalbetrieb prüft der Scanner in Schritt 112 dann, ob er bei jedem Scan zumindest diese Referenzziel-Soll-Signalhöhe auf dem Referenzziel erkennt, also ob das Referenzziel mindestens den Mindest-Soll-Reflexionsgrad liefert. Ist dies nicht der Fall, liegt also die in Schritt 108 erfasste Referenzziel-Ist-Signalhöhe unter der Referenzziel-Soll-Signalhöhe, wird ein Fehlersignal ausgegeben (Schritt 114).

Dadurch dass der Mindest-Soll-Reflexionsgrad des Referenzziels nicht fest vorgegeben ist, sondern bei der Inbetriebnahme festgelegt wird, hat die erfindungsgemäße Sicherheitsvorrichtung eine genau definierte Detektionsfähigkeit, auch wenn Softtargets, wie Nebel, Regen, Schnee oder sonstige Luftverschmutzung vorliegen.

Die scannereigene Bestimmung des Mindest-Soll-Reflexionsgrades des Referenzziels hat den weiteren Vorteil, dass als Referenzziel eine natürlich vorhandene Hauswand oder sonstige Gegenstände dienen können.

Ein einfaches Zahlenbeispiel soll dies noch einmal erläutern: Im Sichtbereich des Scanners befindet sich eine Hauswand mit einem Reflexionsgrad von 30%. Die Hauswand ist stets weiter entfernt als die zu erkennenden Objekte. Die Hauswand dient als Referenzziel. Für eine sichere Objekterkennung wäre es ausreichend, wenn der Reflexionsgrad der Hauswand nur 2% betragen würde. Der erfindungsgemäße Scanner errechnet sich nun ein theoretisches Referenzziel mit einem Mindest-Soll-Reflexionsgrad von 2% am Ort der Hauswand. Solange von der Hauswand eine Referenzziel-Ist-Signalhöhe erhalten wird, die über einer theoretischen 2%-igen Reflexion liegt, was der Referenzziel-Soll-Signalhöhe entspräche, ist der Scanner funktionsfähig. Liegt die Referenzziel-Ist-Signalhöhe, also die aktuelle Reflexion von der Hauswand, aber darunter, liegt eine zu geringe Sichtweite vor und es erfolgt die Ausgabe des Fehlersignals.

In Fig. 4 ist eine weitere Variante beschrieben, bei der während des Normalbetriebs wiederholt der Ist-Reflexionsgrad des Referenzziels in einem Schritt 116 mit der Reflexionsgradermittlungseinheit 58 neu bestimmt wird und anhand dieses aktuellen Reflexionsgrads in Schritt 118 die Sichtweite des Scanners 10 bestimmt wird durch einen Vergleich des Ist-Reflexionsgrades mit dem Mindest-Soll-Reflexionsgrad. Damit kann in einer Applikation abhängig von der Sichtweite z.B. die Ausdehnung des Überwachungsbereichs 18-1 angepasst werden. Ein Applikationsbeispiel dafür wäre beispielsweise der Kollisionsschutz an Kränen. Der Scanner 10 könnte beispielsweise eine geeignete Stelle des Krans erfassen, wenn diese permanent im Sichtbereich des Scanners liegt. Abhängig vom Reflexionsgrad dieses Punktes des Krans kann dann die Sichtweite bestimmt werden und abhängig davon die Bewegung des Krans oder die Größe des Überwachungsbereichs zur Kollisionsvermeidung mit dem Kran entsprechend angepasst werden.

## Patentansprüche

1. Verfahren zur sicheren Erfassung und Positionsbestimmung von Objekten in einem Überwachungsbereich (18-1) mittels eines optoelektronischen Scanners (10) mit den Schritten:
- Aussenden eines Sendelichtstrahls (14) mit einem Lichtsender (12) (100) und
- periodisches Abscannen eines den Überwachungsbereich (18-1) einschließenden Sichtbereichs (18) des Scanners (10) mit dem Sendelichtstrahl (14) über eine Ablenkeinheit (16) (102);
- Empfangen des an Objekten im Sichtbereich reflektierten Sendelichtstrahls (14) mit einem Lichtempfänger (24) und Bereitstellen von Empfangssignalen (20), deren Signalhöhen den empfangenen Lichtintensitäten entsprechen (104),
- Ausgeben eines Sicherheitssignals, Warn- oder Abschaltsignal, wenn ein unzulässiges Objekt im Überwachungsbereich (18-1) detektiert wird,
**gekennzeichnet durch**
- Bereitstellen eines externen Referenzziels (45) im Sichtbereich (18) (106),
- Erfassen der Ist-Signalhöhe der Reflexionen von dem Referenzziel (45) [108],
- Errechnen einer Referenzziel-Soll-Signalhöhe (110), die einem Mindest-Soll-Reflexionsgrad des Referenzziels (45) entspricht, aus dem gemessenen Abstand zum Referenzziel (45), einer scannerspezifischen, abstandsabhängigen Empfangscharakteristik des Lichtempfängers (24) und dem aktuell gemessenen Empfangssignal (20) auf dem Referenzziel (45) bei Inbetriebnahme,
- Ausgeben eines Fehlersignals, wenn während eines Arbeitsbetriebs eine Unterschreitung der Referenzziel-Soll-Signalhöhe erkannt wird (114).

2. Verfahren nach einem der vorhergehenden Ansprüche, wobei der Mindest-Soll-Reflexionsgrad des Referenzziels (45) 2 % beträgt.

3. Verfahren nach einem der vorhergehenden Ansprüche, wobei der Sendelichtstrahl (14) Lichtimpulse umfasst und neben der Signalhöhe der Empfangssignale (20) auch die Lichtlaufzeit und die entsprechenden Winkel, in den die Lichtimpulse ausgesandt wurden, erfasst werden und damit die Position des Referenzziels (45) überwacht wird.

4. Verfahren nach einem der vorhergehenden Ansprüche, wobei periodisch die Referenzziel-Soll-Signalhöhe neu bestimmt wird und abhängig davon Sicherheitsparameter, wie beispielsweise die Ausdehnung des Überwachungsbereichs (18-1), angepasst werden.

5. Verfahren nach einem der vorhergehenden Ansprüche, wobei das Referenzziel (45) ein zu überwachendes Objekt im Überwachungsbereich (18-1) ist.

6. Sicherheitsvorrichtung für ein Verfahren nach einem der vorhergehenden Ansprüche mit einem optoelektronischen Scanner (10), mit einem Lichtsender (12) zum Aussenden eines Sendelichtstrahls (14), mit einer Ablenkeinheit (16) zum periodischen Abscannen eines den Überwachungsbereich (18-1) einschließenden Sichtbereichs (18) des Scanners (10) mit dem Sendelichtstrahl (14), einem Lichtempfänger (24) zum Empfangen des an Objekten im Sichtbereich (18) reflektierten Sendelichtstrahls (14) und zum Bereitstellen von Empfangssignalen (20), deren Signalhöhen den empfangenen Lichtintensitäten entsprechen, einer Auswerteeinheit (32) zum Verarbeiten der Empfangssignale und Ausgeben eines Sicherheitssignals, Warn- oder Abschaltsignal, wenn ein unzulässiges Objekt im Überwachungsbereich (18-1) detektiert wird und mit einem externen Referenzziel (45) im Sichtbereich (18), **dadurch gekennzeichnet, dass** die Auswerteeinheit (32) aufweist:
- eine Signalhöhenermittlungseinheit (56) zur Ermittlung der Ist-Signalhöhe der Reflexionen von dem Referenzziel (45),
- eine Reflexionsgradermittlungseinheit (58) zur Errechnung eines Reflexionsgrades des Referenzziels (45) aus dem gemessenen Abstand zum Referenzziel (45), einer scannerspezifischen, abstandsabhängigen Empfangscharakteristik des Lichtempfängers (24) und aus der Ist-Signalhöhe der Reflexionen von dem Referenzziel (45),
- eine Bestimmungseinheit (60) zum Bestimmen einer Referenzziel-Soll-Signalhöhe, die einem Mindest-Soll-Refelexionsgrad des Referenzziels (45) entspricht und
- einer Ausgabeeinheit zum Ausgeben eines Fehlersignals, wenn während des Arbeitsbetriebs eine Unterschreitung der Referenzziel-Soll-Signalhöhe erkannt wird.

7. Sicherheitsvorrichtung nach Anspruch 6, **dadurch gekennzeichnet, dass** das Referenzziel (45) aus wenigstens einem den Überwachungsbereich (18-1) mechanisch abgrenzenden Element besteht.

8. Sicherheitsvorrichtung nach Anspruch 6 oder 7, **dadurch gekennzeichnet, dass** das Referenzziel (45) einen Retroreflektor aufweist.

9. Sicherheitsvorrichtung nach einem der vorhergehenden Ansprüche 6 bis 8, **dadurch gekennzeichnet, dass** das Referenzziel (45) mindestens so groß ist wie das geometrische Auflösungsvermögen des Scanners (10).

## Claims

1. A process for the fail-safe detection and position determination of objects in a monitoring area (18-1) by means of an opto-electronic scanner (10) comprising the steps of:
- Emitting a transmitted light beam (14) with a light transmitter (12, 100), and
- Periodic scanning of the field of view of the scanner (10) which includes the surveillance area (18-1) with the transmitted light beam (14) and over a deflector unit (16, 102);
- Receiving the reflected transmitted light beam reflected at objects in the field of view with a light receiver (24) and providing receiving signals (20), the signal levels corresponding to the received light intensities of (104),
- Outputting a safety signal , warning or shutdown signal when an unauthorized object is detected in the monitoring area (18-1),
**characterized by**
- Providing an external reference target (45) in the field of view (18, 106),
- Determining the actual amount of signal reflections from the reference target (45, 108),
- Calculating at start-up a reference target setpoint signal level (110), which corresponds to a minimum desired reflectance of the reference target (45) from the measured distance to the reference target (45), a scanner-specific and distance-dependent reception characteristic of the light receiver (24) and the currently measured receiving signal (20) on the reference target (45),
- Outputting an error signal when a drop of the signal under the reference target set point signal level is detected (114) during normal operation.

2. Method according to one of the preceding claims, wherein the minimum desired reflectance of the reference target (45) is 2 %.

3. Method according to one of the preceding claims, wherein the transmitted light beam (14) comprises pulses of light and the light time-of-flight and the respective angle at which the light pulses are transmitted can be detected besides the signal level of the receiving signals (20), and thus the position of the reference target (45) is monitored.

4. Method according to one of the preceding claims, wherein periodically the reference target setpoint signal level is redetermined, and depending upon the redetermination safety parameters, such as the extent of the monitoring region (18-1), are adjusted.

5. Method according to one of the preceding claims, wherein the reference target (45) is an object to be monitored in the monitoring area (18-1).

6. Safety device for a method according to any one of the preceding claims with an opto-electronic scanner (10) comprising a light transmitter (12) for emitting a transmitted light beam (14) with a deflection unit (16) for periodic scanning of a field of view (18) of the scanner including (10) the monitoring area (18-1) with the transmitted light beam (14), a light receiver (24) for receiving the reflected transmitted light beam (14) of objects in the viewing area (18) and for providing receiving signals (20) which signal levels correspond to the receiving light intensities, an evaluation unit (32) for processing the receiving signals and outputting a safety signal, warning or shut-off signal, when an unauthorized object is detected in the surveillance area (18-1) and with an external reference target (45) in the field of view (18), **characterized in that** the evaluation unit (32) comprises:
- a signal level determination unit (56) for determining the actual signal level of the reflection from the reference target (45),
- a reflectance detection unit (58) for calculating a reflection level of the reference target (45) from the measured distance to the reference target (45), a scanner-specific, distance-dependent reception characteristic of the light receiver (24) and from the actual signal level of the reflection of the reference target (45),
- a determination unit (60) for determining a reference target setpoint signal level corresponding to a minimum desired degree of reflection of the reference target (45) and
- an output unit for outputting an error signal when a drop below the reference target setpoint signal level is detected during normal operation.

7. Safety device according to claim 6, **characterized in that** the reference target (45) consists of at least one element mechanically delimiting the monitoring area (18-1).

8. Safety device according to claim 6 or 7, **characterized in that** the reference target (45) comprises a retro-reflector.

9. Safety device according to one of the preceding claims 6 to 8, **characterized in that** the reference target (45) is at least as large as the geometric resolution of the scanner (10).

## Revendications

1. Procédé pour la détection assurée et la détermination de la position d'objets dans une zone de surveillance (18-1) au moyen d'un dispositif de balayage optoélectronique (10) comprenant les étapes consistants à:
- Émettre un faisceau de lumière transmis (14) avec un émetteur de lumière (12, 100), et
- Balayage périodique de champ de vision (10) du balayage comprenant la zone de surveillance (18-1) avec le faisceau lumineux transmis (14) et par une unité de déflexion (16, 102);
- Recevoir le faisceau de lumière transmis réfléchie sur des objets dans le champ de vision avec un récepteur de lumière (24) et fournissant des signaux de réception (20), dont les niveaux des signaux correspondent à les intensités lumineuses reçues (104),
- Émettre un signal de sécurité, d'alarme ou d'arrêt, quand un objet non autorisé est détecté dans la zone de surveillance (18-1),
charactérisé par
- Fourniture d'une cible de référence externe (45) dans le champ de vision (18, 106),
- Déterminer le niveau effectif des réflexions du signal de la cible de référence (45, 108),
- Calculer un niveau de consigne du signal de cible de référence (110), ce qui correspond à un pouvoir réflecteur voulu du minimum de la cible de référence (45) à partir de la distance mesurée à la cible de référence (45), d'un caractéristique de réception du récepteur de lumière (24) qui est spécifique du dispositif de balayage et de la distance et du signal de réception mesuré (20) sur la cible de référence (45),
- Délivrer un signal d'erreur quand le signal n'atteint pas le niveau du signal de consigne du signal de cible de référence (114) pendant le fonctionnement normal.

2. Procédé selon l'une des revendications précédentes, dans lequel la réflectance souhaitée minimale de la cible de référence (45) est de 2 % .

3. Procédé selon l'une des revendications précédentes, dans lequel le faisceau lumineux transmis (14) comprend des impulsions et le temps de vol de la lumière et de l'angle respectif au cours de laquelle les impulsions de lumière sont transmises sont détectées en dehors du niveau de la réception de signal des signaux (20), et donc la position de la cible de référence (45) est surveillée.

4. Procédé selon l'une des revendications précédentes, dans lequel le niveau de consigne du signal de cible de référence est déterminé périodiquement de nouveau, et en référence des paramètres de sécurité, tels que l'étendue de la zone de surveillance (18-1), sont ajustées.

5. Procédé selon l'une des revendications précédentes, dans lequel la cible de référence (45) est un objet à contrôler dans la zone de surveillance (18-1).

6. Dispositif de sécurité pour un procédé selon l'une quelconque des revendications précédentes, avec un dispositif de balayage opto-électronique (10) comprenant un émetteur de lumière (12) pour émettre un faisceau de lumière transmis (14) avec une unité de déviation (16) pour le balayage périodique d'une champ de vision (18) du dispositif de balayage, y compris (10) de la zone de surveillance (18-1) avec le faisceau lumineux transmis (14), un récepteur de lumière (24) pour recevoir le faisceau réfléchi de lumière transmise (14) d'objets dans la zone de visualisation (18) et pour fournir des signaux de réception (20) qui signalent des niveaux correspondent aux intensités de lumière de réception, une unité d'évaluation (32) pour traiter les signaux de réception et sortir un signal de sécurité, alerte ou un signal d'arrêt, quand un objet non-autorisé est détecté dans la zone de surveillance (18-1) et avec une cible de référence externe (45) dans le champ de vision (18), **caractérisé en ce que** l'unité d'évaluation (32) comprend:
- une unité pour déterminer le niveau de signal (56) pour déterminer le niveau effective de signal de la réflexion à partir de la cible de référence (45),
- une unité de détection de facteur de réflexion (58) pour calculer un niveau de la cible de référence (45) de réflexion à partir de la distance mesurée à la cible de référence (45), de la distance de réception de spécification de balayage du récepteur de lumière (24) et à partir au niveau effective du signal de la réflexion de la cible de référence (45),
- une unité de détermination (60) pour déterminer un niveau de consigne du signal de cible de référence correspondant au degré de réflexion de consigne minimal de la cible de référence (45) et
- une unité de sortie pour délivrer en sortie un signal d'erreur quand le niveau de signal de réception n'atteint pas le niveau de consigne du signal de cible de référence détectée pendant le fonctionnement normal.

7. Dispositif de sécurité selon la revendication 6, **caractérisé en ce que** la cible de référence (45) est constitué d'au moins d'un élément délimitant mécaniquement la zone de surveillance (18-1).

8. Dispositif de sécurité selon la revendication 6 ou 7, **caractérisé en ce que** la cible de référence (45) comprend un rétro-réflecteur.

9. Dispositif de sécurité selon l'une quelconque des revendications précédentes 6 à 8, **caractérisé en ce que** la cible de référence (45) est au moins aussi grande que la résolution géométrique du dispositif de balayage (10).
